# EUROPEAN PATENT SPECIFICATION

(11) **EP 3 575 892 B1**
(45) Date of publication and mention of the grant of the patent: **11.05.2022**
(21) Application number: 17893753.8
(22) Date of filing: 27.01.2017
(51) Int. Cl.: G06F 30/20, G06F 17/18, G06N 7/00, G05B 17/02, G06N 3/00, G06N 3/12, G06F 111/08

(54) **MODEL PARAMETER VALUE ESTIMATION DEVICE AND ESTIMATION METHOD, PROGRAM, RECORDING MEDIUM WITH PROGRAM RECORDED THERETO, AND MODEL PARAMETER VALUE ESTIMATION SYSTEM**
VORRICHTUNG ZUR MODELLPARAMETERSCHÄTZUNG UND SCHÄTZUNGSVERFAHREN, PROGRAMM, AUFZEICHNUNGSMEDIUM MIT DARAUF AUFGEZEICHNETEM PROGRAMM UND SYSTEM ZUR MODELLPARAMETERSCHÄTZUNG
DISPOSITIF ET PROCÉDÉ D'ESTIMATION DE VALEURS DE PARAMÈTRES DE MODÈLE, PROGRAMME, SUPPORT D'ENREGISTREMENT SUR LEQUEL EST ENREGISTRÉ UN PROGRAMME, ET SYSTÈME D'ESTIMATION DE VALEURS DE PARAMÈTRES DE MODÈLE

(43) Date of publication of application: 04.12.2019
(73) Proprietor: Mitsubishi Power, Ltd., Yokohama, Kanagawa 220-8401 (JP)
(72) Inventor: YOSHIDA Yasuhiro, Tokyo 100-8280 (JP); TOKUDA Yuya, Tokyo 100-8280 (JP); YOSHIDA Takuya, Tokyo 100-8280 (JP); ENOMOTO Yuki, Yokohama-shi Kanagawa 220-8401 (JP); OSAKI Nobuhiro, Yokohama-shi Kanagawa 220-8401 (JP); NAGAHAMA Yoshito, Yokohama-shi Kanagawa 220-8401 (JP)
(74) Representative: MERH-IP Matias Erny Reichl Hoffmann Patentanwälte PartG mbB
(86) International application number: PCT/JP2017/002995
(87) International publication number: WO 2018/138880

(56) References cited:
- JP-A- 2016 170 753
- JP-B2- 5 418 408
- US-A1- 2016 274 963
- KHATIBISEPEHR SHIMA ET AL: "Design of inferential sensors in the process industry: A review of Bayesian methods", JOURNAL OF PROCESS CONTROL, OXFORD, GB, vol. 23, no. 10, 30 August 2013 (2013-08-30), pages 1575-1596, XP028774610, ISSN: 0959-1524, DOI: 10.1016/J.JPROCONT.2013.05.007

## Description

### Technical Field

The present invention relates to an estimator, an estimation method, a program and a storage medium where a program stored for a parameter estimation and a model parameter estimation system.

### Background Art

There are cases, for industrial products (hereinafter, referred to as products) including automobiles, aerospace instruments, and power generation plants, in which a so-called plant model that simulates a product operation is used for the performance verification in design and/or for health monitoring (technique for detecting an anomaly of a product or a foresight of the anomaly from a measurement value of a sensor attached to the product) in operation. The plant model is useful for grasping product characteristics by roughly reproducing an operation, product limit design (critical design that can ensure safety) by safety evaluation, grasping product states based on measurement information, and the like. Therefore, improving the validity of a computation result of the plant model makes it possible to perform more accurate verification while taking advantage of the plant model and to provide higher value-added services.

Meanwhile, in a case of taking advantage of the plant model, it is necessary to input product characteristic values as model parameter values. Inputting appropriate model parameter values estimated on the basis of measurement values such as test data and operation data about an actual product makes it possible to improve the validity of the computation result of the plant model. Concerning a model parameter value estimation technique, there is known a technique for executing simulation on a probability density function related to the product characteristics a plurality of times while varying the model parameter values, and for searching a model parameter value with a maximum likelihood (refer to Patent Document 1 and the like). Patent Document 2 discloses an equipment evaluation system, which includes an estimator, an acquirer, a hardware storage and an evaluator. The estimator is implemented by the computer, to estimate a probability density distribution of a parameter representing performance of subject equipment based on measurement data of the subject equipment, the measurement data resulting from a measurement performed at each of a plurality of times. The acquirer acquires a use pattern of the subject equipment. The hardware storage stores the use pattern in association with the probability density distribution for the subject equipment.

### Prior Art Document

### Patent Document

Patent Document 1: Japanese Patent No. 5418408
Patent Document 2: US 2016/274963 A1

### Summary of the Invention

### Problem to be Solved by the Invention

According to Patent Document 1, a user needs to input statistics such as a standard deviation of the probability density function related to the product characteristics. Owing to this, there is a limit to estimation accuracy for the model parameter values in a case in which a distribution profile and statistics for the probability density function are unknown or difficult to estimate due to the insufficient number of items of data about the measurement value.

The present invention has been achieved in the light of the above circumstances, and an object of the present invention is to provide an estimator and an estimation method for model parameter value estimation, a program, a storage medium storing a program, and a model parameter value estimation system capable of estimating a model parameter value even if a distribution profile and statistics for the probability density function are unknown or difficult to estimate.

### Means for Solving the Problem

The above mentioned problem is solved by the appended claims. In particular a model parameter value estimator includes: a plant model which is a preset physical model simulating an operation of a target product, to which a model parameter value is input, and which computes a process value; a model parameter value estimation section which estimates the model parameter value with a higher likelihood on the basis of the process value; an accumulation section which accumulates a computation result of the model parameter value estimation section; and an output section which outputs the computation result of the model parameter value estimation section. A measurement value of the target product and a plurality of process values computed by the plant model are input to the model parameter value estimation section. The model parameter value estimation section performs Bayesian updating on a probability density function accumulated in the accumulation section while regarding a function generated on the basis of accuracy evaluation of each of the plurality of process values with respect to the measurement value as a likelihood function.

### Effect of the Invention

According to the present invention, it is possible to provide an estimator and an estimation method for model parameter value estimation, a program, a storage medium storing a program, and a model parameter value estimation system that can estimate a model parameter value even if a distribution profile and statistics for a probability density function are unknown.

### Brief Description of the Drawings

Fig. 1 is a schematic diagram of a model parameter estimation system according to a first embodiment of the present invention.
Fig. 2 illustrates an example of a scatter diagram generated by a scatter diagram generation section.
Fig. 3 illustrates an example of a likelihood function acquired by a likelihood function acquisition section.
Fig. 4 illustrates an output example of an output section.
Fig. 5 illustrates another output example of the output section 5.
Fig. 6 is a flowchart illustrating a procedure for a model parameter estimation method according to the first embodiment of the present invention.
Fig. 7 is a schematic diagram of a computer that realizes processes by the model parameter estimator according to the first embodiment of the present invention.
Fig. 8 is a schematic diagram of a model parameter value estimator according to a second embodiment of the present invention.
Fig. 9 is an illustrative diagram of a relationship among model parameters related to static characteristics and dynamic characteristics.
Fig. 10 is a schematic diagram of a model parameter value estimator according to a third embodiment of the present invention.
Fig. 11 exemplarily illustrates transition of a model parameter average value.

### Modes For Carrying Out the Invention

### <First Embodiment>

### (Configuration)

### 1. Model parameter value estimator or model parameter value estimation system

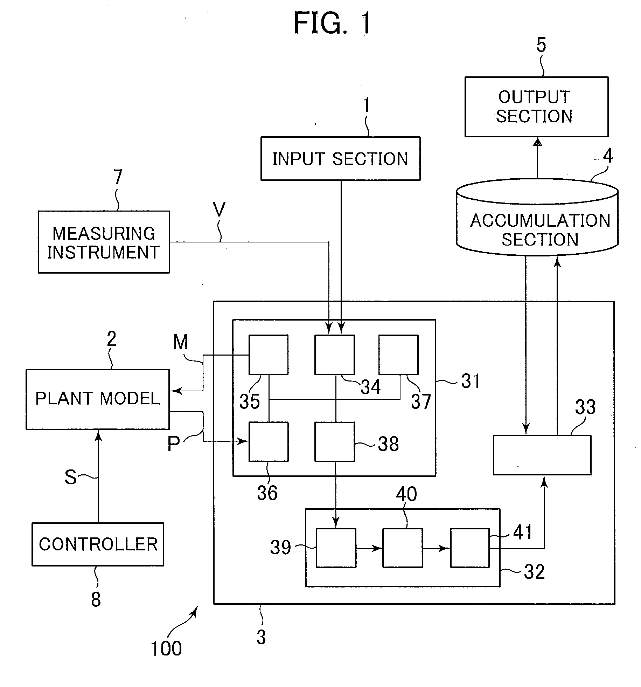

Fig. 1 is a schematic diagram of a model parameter value estimator according to the present embodiment. As illustrated in Fig. 1, a model parameter value estimator 100 according to the present embodiment includes an input section 1, a plant model 2, a model parameter value estimation section 3, an accumulation section 4, and an output section 5. It is noted that the input section 1, the model parameter value estimation section 3, the accumulation section 4, the output section 5, and the like could be stored in the same terminal as a whole, or part of the elements could be stored in terminals/servers at remote locations at home or abroad and the elements could be configured as a system.

### 2. Input section

The input section 1 is a section to which an item (type) of a model parameter to be estimated and an upper limit and a lower limit of model parameter values related to the model parameters to be estimated are input. The item of the model parameter to be estimated and the upper limit and the lower limit of the model parameter values are input to the input section 1 by, for example, a user. The number of items of model parameters input to the input section 1 may be one or may be equal to or greater than two. The input section 1 is not limited to a specific one if the input section 1 is configured such that the item of the model parameter to be estimated and the upper limit and the lower limit of the model parameter values can be input thereto.

### 3. Plant model

The plant model is a type of preset physical model (simulator) that simulates an operation of a product on the basis of a simulated control signal corresponding to a control signal used in actual product operation control. Examples of the plant model include simulators for an engine, an inverter, a motor, a vehicle, and the like used in MILS (Model in the loop simulation) and SILS (Software in the loop simulation) in automotive model-based development, and dynamic characteristics simulators computing transient characteristics of temperatures, pressures, flows, and the like of fluids flowing within power generation plants such as a thermal power generation plant and a nuclear power generation plant from material balances or heat balances of gas and steam. The plant model is established by a combination of computation models related to various characteristics of a product to be simulated (hereinafter, referred to as "target product"). Examples of the computation models include a pressure/flow computation model that computes pressures and flows from publicly known fluid mechanics equations, and a temperature/heat transfer volume computation model that computes temperatures and heat transfer volumes from publicly known thermodynamics equations and heat transfer equations.

A plurality of model parameter values M are input to the plant model 2 according to the present embodiment from the model parameter value estimation section 3, and the plant model 2 simulates an operation of the target product on the basis of simulated control signals S output from a controller 8 to compute a plurality of process values P corresponding to each of the model parameter values M. In a case in which the power generation plant is the target product, the model parameter values include a heat transfer area, a thickness, and a scaling factor of pipework, a temperature and a heat quantity of gas turbine exhaust gas in response to a gas turbine load, time constants of response delays in a temperature and a mass flow of steam, which is generated by heat recovery from the gas turbine exhaust gas, with respect to a change in the gas turbine load, the temperature and the flow of the steam in response to the gas turbine load, and the like. The process values include values, such as flows, temperatures, and pressures of gas and steam flowing in the power generation plant including a flow, a temperature, and a pressure of combustion gas, which can be directly acquired by measuring instruments, and values, such as the gas turbine load, a coal fired boiler load, and a steam turbine load, and a thermal stress within a plant structure, which can be indirectly acquired on the basis of measurement values of the measuring instruments.

### 4. Model parameter value estimation section

The model parameter value estimation section 3 estimates a model parameter value with a higher likelihood on the basis of process values. In the present embodiment, the model parameter value estimation section 3 estimates a model parameter value with a high likelihood by inputting measurement values V acquired by a measuring instrument 7 provided in the target product during operation of the target product and the plurality of process values P computed by the plant model 2 and by performing Bayesian updating on probability density functions accumulated in the accumulation section 4 while regarding a function generated on the basis of accuracy evaluation of the plurality of process values P with respect to the measurement values V as a likelihood function. The measurement values V input to the model parameter value estimation section 3 correspond to the process values P computed by the plant model 2. For example, when the process value P computed by the plant model 2 is the temperature of the combustion gas, the measurement value V input to the model parameter value estimation section 3 is also the temperature of the combustion gas. The model parameter value estimation section 3 includes a model parameter sensitivity analysis section 31, a likelihood function generation section 32, and a Bayesian learning section 33.

### 4-1. Model parameter sensitivity analysis section

The model parameter sensitivity analysis section 31 generates a scatter diagram that depicts a relationship between the model parameter values M and evaluation values that indicate accuracy evaluation of the plurality of process values P with respect to the measurement values V on the basis of the evaluation values. The model parameter sensitivity analysis section 31 includes a model parameter information acquisition section 34, a model parameter value output section 35, a process value input section 36, an evaluation value generation section 37, and a scatter diagram generation section 38.

### • Model parameter information acquisition section

The model parameter information acquisition section 34 is electrically connected to the input section 1 and the measuring instrument 7. In the present embodiment, the item of the model parameter and the upper limit and the lower limit of the model parameter values input to the input section 1 and the measurement values V acquired by the measuring instrument 7 are input to the model parameter information acquisition section 34.

### • Model parameter value output section

The item of the model parameter and the upper limit and the lower limit of the model parameter values input to the model parameter information acquisition section 34 are input to the model parameter value output section 35, and the model parameter value output section 35 changes model parameter values within a range from the input upper limit to the input lower limit to generate a plurality of model parameter values, and outputs the plurality of model parameter values to the plant model 2. Examples of a method of generating the plurality of model parameter values include a generation method by randomly changing the model parameter values within the range from the upper limit to the lower limit, a generation method by equally dividing the model parameter values within the range from the upper limit to the lower limit, and a search method using a publicly known machine learning technique. However, the method is not limited to a specific one if the plurality of model parameter values dispersed within the range from the upper limit to the lower limit can be obtained by the method.

In the present embodiment, the model parameter value output section 35 has not only function described above but also a function to determine whether all of the plurality of model parameter values have been output to the plant model 2. For example, if the plurality of model parameter values are randomly generated within the range from the upper limit to the lower limit, the model parameter value output section 35 determines whether the number x of the model parameter values output to the plant model 2 reaches the number X of the generated model parameter values.

In the present embodiment, if the number of the input items of model parameters is two or more, the model parameter value output section 35 generates a plurality of model parameter values for the model parameter corresponding to one item, sets a model parameter value as a fixed value for the model parameter corresponding to the other item, and outputs the plurality of model parameter values for the model parameter corresponding to the one item and the fixed value for the model parameter corresponding to the other item to the plant model 2. After completing computation for the model parameter corresponding to the one item, the model parameter value output section 35 generates a plurality of model parameter values for the model parameter corresponding to the other item and outputs the plurality of model parameter values to the plant model 2. The model parameter value output section 35 repeats the above operation for each of the input items of model parameters.

### • Process value input section

The plurality of process values P output from the plant model 2 to correspond to each of the model parameter values M are input to the process value input section 36.

### • Evaluation value generation section

The plurality of process values P are input to the evaluation value generation section 37 from the process value input section 36 and the measurement values V are input thereto from the model parameter information acquisition section 34, and the evaluation value generation section 37 generates evaluation values E that indicate accuracy evaluation of the plurality of process values P with respect to the measurement values V from a pre-defined evaluation equation on the basis of differences between the plurality of process values P and the measurement values V.

The evaluation equation is defined to generate a higher evaluation value as the difference between the process value P and the measurement value V is smaller. Examples of the evaluation equation include one defined such that an absolute value of the difference between the process value P and the measurement value V is regarded as an error for the measurement value V, a numeric value obtained by dividing this absolute value by 100 is subtracted from 1, and a resultant value is evaluated. It is noted that the accuracy evaluation of the plurality of process values P with respect to the measurement values V is not limited to specific one if accuracies of the plurality of process values P with respect to the measurement values V can be evaluated by time-averaging instantaneous maximum errors or differences between the measurement values V and the plurality of process values P.

### • Scatter diagram generation section

Each model parameter value M is input to the scatter diagram generation section 38 from the model parameter value output section 35 and the evaluation value E corresponding to each model parameter value M is input thereto from the evaluation value generation section 37, and the scatter diagram generation section 38 generates a scatter diagram that depicts the relationship between each input model parameter values M and the input evaluation values E.

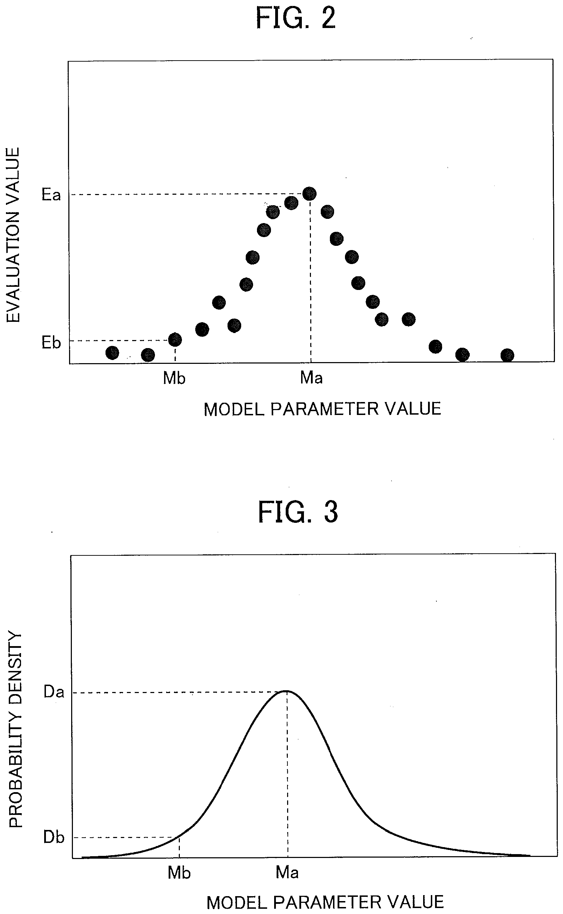

Fig. 2 illustrates an example of the scatter diagram generated by the scatter diagram generation section 38. A vertical axis indicates the evaluation value E and a horizontal axis indicates each model parameter value M. In the scatter diagram exemplarily illustrated in Fig. 2, an evaluation value Ea corresponding to a model parameter value Ma is the highest; thus, a difference between a process value Pa corresponding to the model parameter value Ma and the measurement value V is the smallest. On the other hand, an evaluation value Eb corresponding to a model parameter value Mb is lower than the evaluation value Ea; thus, a difference between a process value Pb corresponding to the model parameter value Mb and the measurement value V is larger than the difference between the process value Pa and the measurement value V.

### 4-2. Likelihood function generation section

The likelihood function generation section 32 acquires a probability density function on the basis of the scatter diagram generated by the scatter diagram generation section 38 and generates (acquires) a likelihood function. The likelihood function generation section 32 includes a function regression section 39, a probability density function acquisition section 40, and a likelihood function acquisition section 41.

### • Function regression section

The function regression section 39 is electrically connected to the scatter diagram generation section 38. The scatter diagram generated by the scatter diagram generation section 38 is input to the function regression section 39, and the function regression section 39 generates a function by performing function regression on the input scatter diagram. Examples of a function regression method include a method of searching a function suited for a profile of the scatter diagram generated by the scatter diagram generation section 38 from a plurality of function data stored in a storage section (not depicted) in advance using publicly known machine learning. It is noted that the function regression method is not limited to a specific method if a function that reduces a distance (difference) between the pieces of data in the scatter diagram generated by the scatter diagram generation section 38 is obtained by the method.

### • Probability density function acquisition section

The function generated by the function regression section 39 is input to the probability density function acquisition section 40, and the probability density function acquisition section 40 regards a function obtained by normalizing the input function as a probability density function that indicates a probability of each model parameter value M. In the present embodiment, the probability density function acquisition section 40 normalizes the function generated by the function regression section 39 in such a manner that a value integrated along the range from the upper limit to the lower limit of the model parameter value input to the input section 1 becomes 1.

### • Likelihood function acquisition section

The probability density function acquired by the probability density function acquisition section 40 is input to the likelihood function acquisition section 41, and the likelihood function acquisition section 41 regards the input probability density function as a likelihood function by Bayesian updating and outputs the probability density function. The present embodiment exemplifies a configuration of the likelihood function generation section 32 such that the probability density function acquisition section 40 regards the function obtained by normalizing the function generated by the function regression section 39 as the probability density function and that the likelihood function acquisition section 41 regards the probability density function acquired by the probability density function acquisition section 40 as the likelihood function by the Bayesian updating and outputs the probability density function. However, the likelihood function generation section 32 is not always limited to the configuration described above. For example, the likelihood function generation section 32 may be configured such that the likelihood function acquisition section 41 includes the probability density function acquisition section 40, the function generated by the function regression section 39 is input to the likelihood function acquisition section 41, and the likelihood function acquisition section 41 normalizes the input function, regards the function obtained by normalizing the input function as the probability density function, and outputs the probability density function as the likelihood function.

Fig. 3 illustrates an example of the likelihood function acquired by the likelihood function acquisition section 41. A vertical axis indicates a probability density D and a horizontal axis indicates each model parameter value M. In the likelihood function exemplarily illustrated in Fig. 3, a probability density Da corresponding to the model parameter value Ma is the highest, and a probability density Db corresponding to the model parameter value Mb is lower than the probability density Da.

### 4-3. Bayesian learning section

The Bayesian learning section 33 is electrically connected to the likelihood function acquisition section 41 and the accumulation section 4. The likelihood function acquired by the likelihood function acquisition section 41 is input to the Bayesian learning section 33, and the Bayesian learning section 33 reads the latest probability density function among the probability density functions accumulated in the accumulation section 4 and related to the model parameter values, performs Bayesian updating using the input likelihood function with the read probability density function assumed as prior distribution data, and generates a probability density function related to each model parameter value as posterior distribution data.

### 5. Accumulation section

The accumulation section 4 accumulates a computation result of the model parameter value estimation section 3. Specifically, the probability density functions generated by Bayesian updating in the Bayesian learning section 33 and related to the model parameter values are input to and accumulated in the accumulation section 4. In the present embodiment, the accumulation section 4 accumulates each probability density function generated by past Bayesian updating (Bayesian updating prior to the latest Bayesian updating).

### 6. Output section

The output section 5 outputs the computation result of the model parameter value estimation section 3. Specifically, the output section 5 reads and outputs the probability density functions accumulated in the accumulation section 4. The output section 5 is a display device or the like that displays the probability density functions. In the present embodiment, the output section 5 is configured to display one or more combinations of the probability density functions each by an arbitrary number of times of updating among the plurality of probability density functions accumulated in the accumulation section 4 and the model parameter values corresponding to an average of each of the probability density functions.

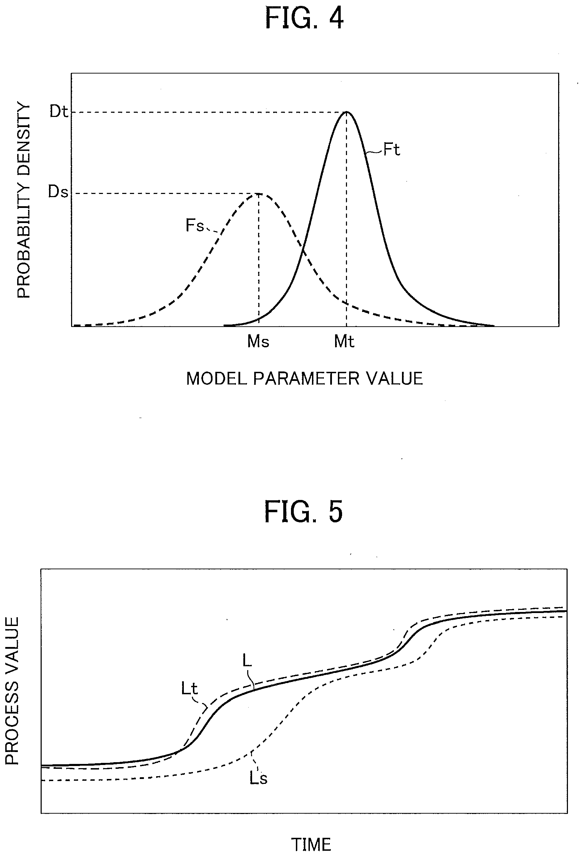

Fig. 4 illustrates an output example of the output section 5. A vertical axis indicates the probability density D and a horizontal axis indicates each model parameter value M. A dotted line indicates a probability density function Fs if the number of times of Bayesian updating (number of times of learning) is S, and a solid line indicates a probability density function Ft if the number of times of Bayesian updating is T (> S). Furthermore, it is defined that a model parameter value corresponding to the average of the probability density function Fs is Ms and a model parameter value corresponding to the average of the probability density function Ft is Mt. It is also defined that a probability density corresponding to the model parameter value Ms is Ds and a probability density corresponding to the model parameter value Mt is Dt. In the output example illustrated in Fig. 4, the output section 5 displays combinations of the probability density functions by the Bayesian updating the S times and T time and the model parameter values Ms and Mt corresponding to the averages of the probability density functions Fs and Ft.

As illustrated in Fig. 4, as the number of times of Bayesian updating (number of times of learning) of the probability density function is lower, a standard deviation of the probability density function becomes larger and the likelihood of the model parameter value becomes lower. On the other hand, as the number of items of data about the measurement values V increases and learning progresses (the number of repetitions of Bayesian updating increases), the standard deviation of the probability density function becomes smaller and the model parameter value with a higher likelihood is obtained. In other words, the probability density Dt corresponding to the model parameter value Mt is higher than the probability density Ds corresponding to the model parameter value Ms.

Furthermore, the output section 5 may compare transitions of transient response of the process values P obtained by inputting the measurement values V of the target product and the model parameter values M corresponding to the averages of the probability density functions by arbitrary numbers of times of updating to the plant model 2 and output a comparison result.

Fig. 5 illustrates another output example of the output section 5. A vertical axis indicates the process value P and a horizontal axis indicates time t. A solid line indicates a transition line L of the measurement value (measured value) V of the target product, a dotted line indicates a transition line Ls of a process value Ps corresponding to the model parameter value Ms, and a dotted line indicates a transition line Lt of a process value Pt corresponding to the model parameter value Mt. As described above, the likelihood of the model parameter value Mt is higher than that of the model parameter value Ms. Owing to this, as illustrated in Fig. 5, the transition line Lt is closer to a profile of the transition line L than the transition line Ls (in other words, an error of the process value Pt with respect to the measurement value V is smaller than that of the process value Ps with respect to the measurement value V).

### (Operation)

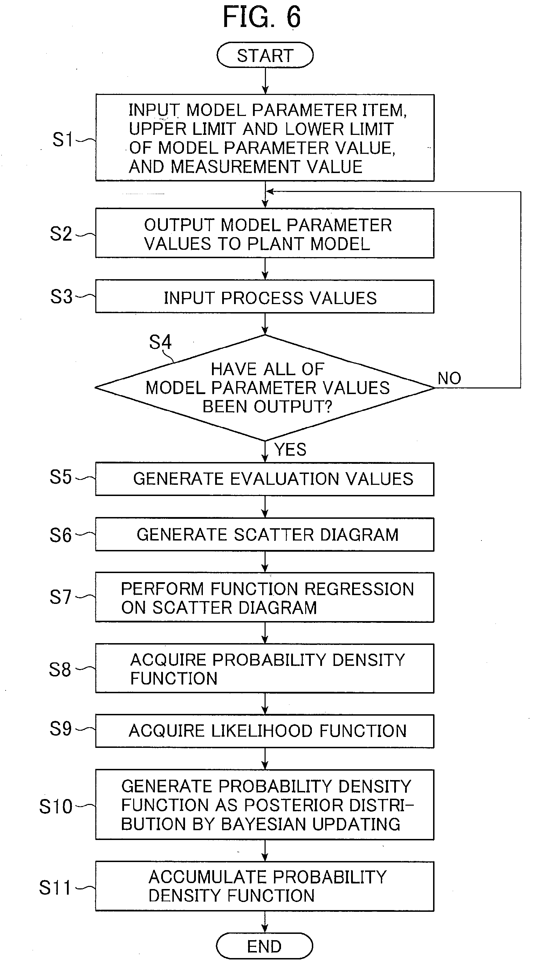

Fig. 6 is a flowchart illustrating a procedure for a model parameter value estimation method according to the present embodiment.

In the present embodiment, the model parameter value estimator 100 estimates model parameter values if the measurement value of the target product is measured.

When the measurement values V of the target product are measured, the item of model parameter, the upper limit and the lower limit of the model parameter values, and the measurement values V are input to the model parameter information acquisition section 34 (Step S1).

The model parameter value output section 35 then generates the plurality of model parameter values M within the range from the upper limit to the lower limit and outputs them to the plant model 2 (Step S2).

The process values P output from the plant model 2 are then input to the process value input section 36 (Step S3).

The model parameter value output section 35 then determines whether all of the plurality of model parameter values M have been output to the plant model 2 (Step S4). If the model parameter value output section 35 determines that all of the plurality of model parameter values M have been output to the plant model 2 (Yes), the model parameter value estimator 100 moves the procedure from Step S4 to Step S5. Conversely, if the model parameter value output section 35 determines that at least one of the plurality of model parameter values M has not been output to the plant model 2 (No), the model parameter value estimator 100 repeats Steps S2, S3, and S4 until the model parameter value output section 35 determines that all of the plurality of model parameter values M have been output to the plant model 2.

If the model parameter value output section 35 determines that all of the plurality of model parameter values M have been output to the plant model 2 in Step S4, the evaluation value generation section 37 generates the evaluation value E that indicates the accuracy evaluation of each of the process values P with respect to the measurement value V on the basis of the differences between the process values P and the measurement value V (Step S5).

Next, the scatter diagram generation section 38 generates the scatter diagram that depicts the relationship between the model parameter values M and the evaluation values E (Step S6).

The function regression section 39 then performs function regression on the scatter diagram to generate a function (Step S7).

The probability density function acquisition section 40 then normalizes the function generated by the function-regression section 39 and acquires the probability density function related to each model parameter value (Step S8).

The likelihood function acquisition section 41 then acquires the likelihood function by Bayesian updating from the probability density function acquired by the probability density function acquisition section 40 (Step S9).

The Bayesian learning section 33 then performs Bayesian updating using the likelihood function with the latest probability density function among the probability density functions accumulated in the accumulation section 4 assumed as a prior distribution, and generates the probability density function related to each model parameter value as a posterior distribution (Step S10).

The accumulation section 4 then accumulates the probability density function generated by Bayesian updating in the Bayesian learning section 33 (Step S11).

Processes by the model parameter estimator 100 according to the present embodiment may be realized by pa program stored in a computer. A case in which the program stored in the computer realizes the processes by the model parameter estimator 100 according to the present embodiment will next be described.

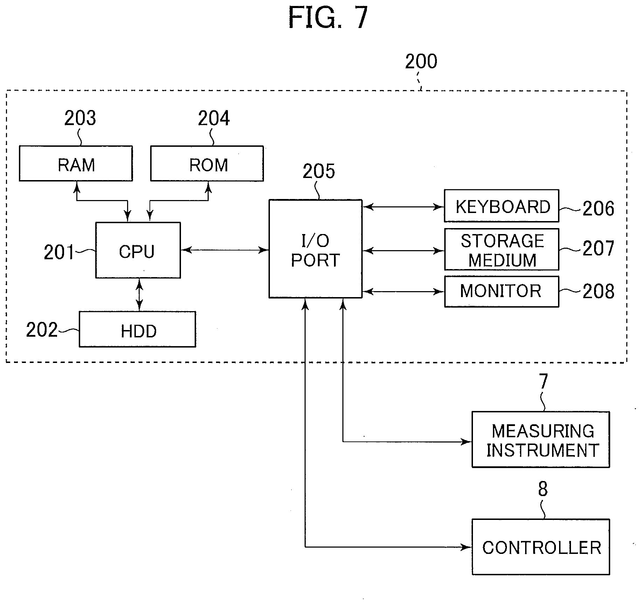

Fig. 7 is a schematic diagram of the computer that realizes the processes by the model parameter estimator 100 according to the present embodiment. As illustrated in Fig.7, a computer 200 according to the present embodiment includes, as hardware, a CPU (Central Processing Unit) 201, an HDD (Hard Disk Drive) 202, a RAM (Random Access Memory) 203, a ROM (Read Only Memory) 204, an I/O port 205, a keyboard 206, a storage medium 207, and a monitor 208.

In the present embodiment, the program executed by the computer 200 is stored in the ROM 204, and the plant model 2, the model parameter value, estimation section 3, the accumulation section 4, and the like are loaded onto the RAM 203 and generated by causing the CPU 201 to read the program from the ROM 204 and execute the program. In the present embodiment, the item of the model parameter and the upper limit and the lower limit of the model parameter values are input from the keyboard 206 and are transmitted, together with the measurement values V measured by the measuring instrument 7, to the CPU 201 via the I/O port 205. Furthermore, the evaluation equation for generating evaluation values, function data used in the function regression, the probability density functions related to the model parameter values, and the like are stored in storage mediums such as the HDD 202 and the ROM 204. Moreover, the probability density functions generated by Bayesian updating are stored in the storage mediums such as the HDD 202 and the ROM 204 and also displayed on the monitor 208 via the I/O port 205.

In this way, the processes by the model parameter estimator 100 according to the present embodiment may be realized as the program which the computer is causes to execute. For example, the processes described above may be realized by installing such a program from a server or the like and causing the computer to execute the program. Alternatively, the processes described above can be realized by storing such a program in the storage medium 207 and causing the computer to read this program. As the storage medium 207, any of various types of mediums including storage mediums such as a CD-ROM, a flexible disk, and a magneto-optical disk for storing information optically, electrically, or magnetically, and semiconductor memories such as a ROM and a flash memory for electrically storing information can be used. A configuration of the plant model 2 is not limited to a configuration such that the plant model 2 is loaded onto the RAM 203 by causing the CPU 201 to read the program from the ROM 204 and to execute the program; alternatively, the plant model 2 may be configured such that the plant model 2 is provided as hardware different from and independent of the computer 200.

### (Effects)

(1) The model parameter value estimator 100 according to the present embodiment inputs a plurality of model parameter values M to the plant model 2 to acquire a plurality of process values P, estimates graphs related to accuracy evaluation of the plurality of process values P with respect to the measurement values V of the target product as the probability density functions, and performs Bayesian updating on the probability density functions related to the model parameter values while regarding the probability density functions as the likelihood function. In this way, the model parameter value estimator 100 according to the present embodiment estimates the probability density functions from the accuracy evaluation of the plurality of process values P with respect to the measurement values V of the target product and regards the probability density functions as the likelihood function. Owing to this, it is possible to apply Bayesian updating even to a target for which it is difficult to estimate the probability density functions such as device characteristics of the plant. Therefore, even if a distribution profile and statistics for the probability density function relates to each model parameter value are either unknown or difficult to estimate (without prior knowledge), it is possible to estimate the model parameter values by applying Bayesian updating.

Moreover, a massive amount of measurement data is normally required to obtain the probability density functions; however, even if the number of items of measurement data is low, it is possible to improve validity of the computation result of the plant model 2 by compensating for the measurement data using the plant model as in the model parameter value estimator 100 according to the present embodiment.

(2) According to the present embodiment, it is possible to improve the validity of the computation result of the plant model 2 by re-inputting (reflecting) the model parameter value with a higher likelihood estimated by the model parameter value estimation section 3 to (in) the plant model 2.

(3) In the present embodiment, the output section 5 is configured to compare the probability density functions before and after Bayesian updating and output a comparison result. Owing to this, the user enables the output section 5 to compare, for example, the probability density function at timing (first timing) at which the model parameter value currently input to the plant model 2 is estimated with the latest probability density function at timing (second timing) which is after the first timing and at which Bayesian updating is repeatedly performed and to display the comparison result. The user can thereby visually confirm the probability of the model parameter values estimated from the standard deviations of the probability density functions compared and displayed by the output section 5 and determine whether it is necessary to update (re-estimate) the model parameter values input to the plant model 2.

(4) It is possible to improve the validity of the computation result of the plant model by inputting the model parameter values that are appropriate (in other words, closer to a true value) to the plant model. Owing to this, it is possible to improve the validity of the computation result of the plant model by inputting the model parameter values estimated by the model parameter value estimator according to the present embodiment to the plant model. Therefore, it is possible to review a target product control method and improve the control method by using this plant model.

### <Second Embodiment>

### (Configuration)

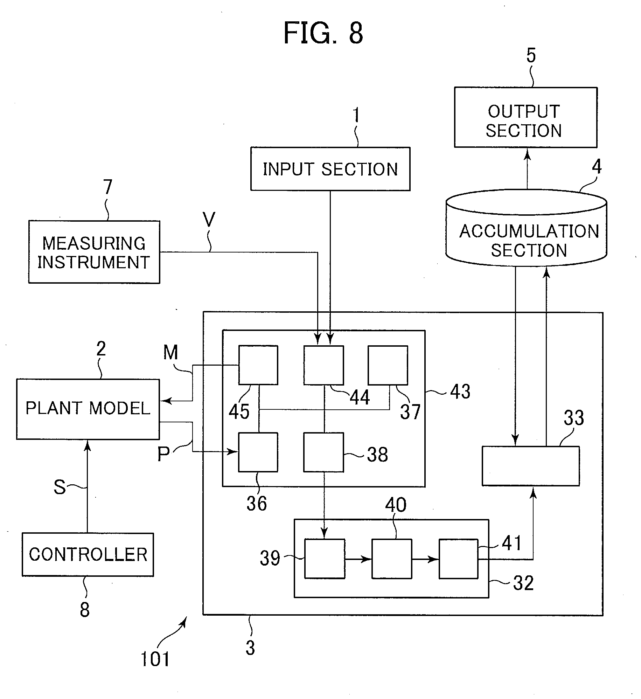

Fig. 8 is a schematic diagram of a model parameter value estimator according to the present embodiment. In Fig. 8, equivalent sections to those in the model parameter value estimator 100 according to the first embodiment are denoted by the same reference characters and description thereof will be omitted as appropriate.

As illustrated in Fig. 8, a model parameter value estimator 101 according to the present embodiment differs from the model parameter value estimator 100 in that the model parameter value estimator 101 includes an optimum model parameter value search section 43 as an alternative to the model parameter sensitivity analysis section 31. The model parameter value estimator 101 is similar to the model parameter value estimator 100 in other configurations.

As illustrated in Fig. 8, the optimum model parameter value search section 43 includes a second model parameter information acquisition section 44 and a second model parameter value output section 45 as alternatives to the model parameter information acquisition section 34 and the model parameter value output section 35. The optimum model parameter value search section 43 is similar to the model parameter sensitivity analysis section 31 in other configurations.

The second model parameter information acquisition section 44 is electrically connected to the input section 1 and the measuring instrument 7. In the present embodiment, two (two types) or more items of model parameters and the upper limit and the lower limit of each of the model parameter values input to the input section 1 and the measurement values V acquired by the measuring instrument 7 are input to the second model parameter information acquisition section 44.

The two or more items of model parameters and the upper limit and the lower limit of each of the model parameter values input to the model parameter information acquisition section 34 are input to the second model parameter value output section 45, and the second model parameter value output section 45 simultaneously changes the model parameter values within the range from the input upper limit to the input lower limit to generate a plurality of model parameter values, and outputs the plurality of model parameter values to the plant model 2. Examples of the method of generating the plurality of model parameter values include the generation method by randomly changing the model parameter values within the range from the upper limit to the lower limit, the generation method by equally dividing the model parameter values within the range from the upper limit to the lower limit, and the search method using the publicly known machine learning technique. However, the method is not limited to a specific one if the plurality of model parameter values dispersed within the range from the upper limit to the lower limit can be obtained by the method. It is noted that if a value that enables the difference between the measurement value of the target product and the process values to be reduced is searched using an optimization algorithm based on multi-point search, many non-optimum solutions are obtained simultaneously in a course of computing a global optimum solution; thus, it is possible to efficiently generate the scatter diagram that depicts the relationship between the model parameter values and the evaluation values as exemplarily illustrated in Fig. 2. Examples of the optimization algorithm based on the multi-point search include a genetic algorithm, a MOGA (Multi-Objective Genetic Algorithm), an NSGA-II (Non-dominated Sorting Genetic Algorithms-II), and an SPEA2 (Strength Pareto Evolutionary Algorithm-II) obtained by extending the genetic algorithm to multi-objective optimization, and a particle swarm optimization.

In the present embodiment, an example of computation in the pipework (single pipe) has been described for the model parameters; however, the present invention is also applicable to simulators for the engine, the inverter, the motor, a vehicle, and the like in the automotive model-based development, and dynamic characteristics simulators within power generation plants such as the thermal power generation plant and the nuclear power generation plant.

### (Effects)

With the configuration described above, the present embodiment can attain the following effects in addition to each of the effects obtained by the first embodiment described above.

In the present embodiment, the model parameter values are simultaneously changed for the model parameters to be estimated to generate a plurality of model parameter values M, the plurality of model parameter values M are input to the plant model 2, and a plurality of process values P are acquired. Owing to this, even if the model parameters to be estimated are two or more mutually influencing model parameters, it is possible to independently generate the scatter diagram that depicts the relationship between the plurality of model parameter values M and the evaluation values E. As a result, even if the model parameters to be estimated are two or more mutually influencing model parameters, it is possible to acquire the likelihood function on the basis of the independently generated scatter diagram and estimate the model parameter values by performing Bayesian updating on the probability density functions related to the model parameter values.

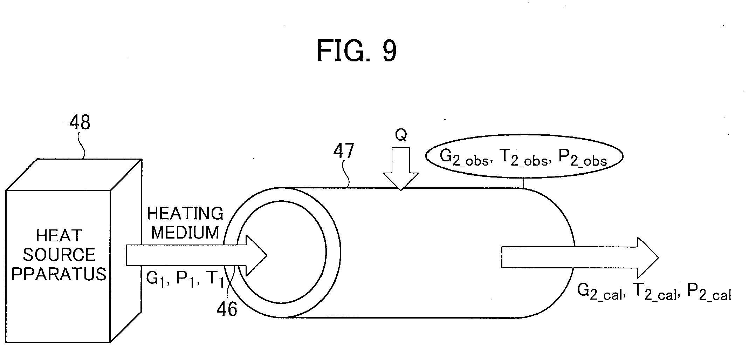

The two or more mutually influencing model parameters will be described. Examples of the two or more mutually influencing model parameters include model parameters related to static characteristics and model parameters related to dynamic characteristics. Fig. 9 is an illustrative diagram of a relationship among the model parameters related to the static characteristics and the dynamic characteristics. As exemplarily illustrated in Fig. 9, it is assumed in the present embodiment that a heating medium 46 discharged from the heat source apparatus 48 and having a mass flow G1, a pressure P1, and a temperature T1 flows into pipework 47 connected to the heat source apparatus 48, receives a heat quantity Q while flowing in the pipework 47, and is discharged to outside of the pipework 47. At this time, model parameter values are estimated in a case in which measurement values (mass flow G2_obs, pressure P2_obs, and temperature T2_obs) at an exit of the pipework 47 match process values (mass flow G2_cal, pressure P2_cal, and temperature T2_cal) when an operating state of a heat source apparatus 48, for example, a load of the heat source apparatus 48 is set as an input condition for the plant model 2 and this load changes over time. If the load of the heat source apparatus 48 is settled to a constant value, a state of the heating medium 46 discharged from the heat source apparatus 48 is also kept constant; thus, the mass flow G1, the pressure P1, and the temperature T1 of the heating medium 46 in response to the load of the heat source apparatus 48 serve as model parameters related to static characteristics. On the other hand, a heat transfer area A of the pipework 47, a pipework thickness d, a pipework scaling factor Rf, a delay time constant τ, a coefficient k related to a heat transfer rate, and the like influence the transient response and, therefore, serve as model parameters related to dynamic characteristics. If only the measurement values in the transient response are obtained for the mass flow G2_obs, the pressure P2_obs, and the temperature T2_obs, this transient response is influences by the model parameters related to the static characteristics and the dynamic characteristics; thus, it is difficult to uniquely estimate model parameter values that enable the measurement values match the process values.

According to the present embodiment, by contrast, even if the model parameters to be estimated are two or more mutually influencing model parameters, it is possible to independently generate the scatter diagram that depicts the relationship between the plurality of model parameter values M and the evaluation values E, as described above. As a result, even for multidimensional problems such as the model parameters related to the static characteristics and the model parameters related to dynamic characteristics, it is possible to simultaneously estimate the model parameter values from transient data.

### <Third Embodiment>

### (Configuration)

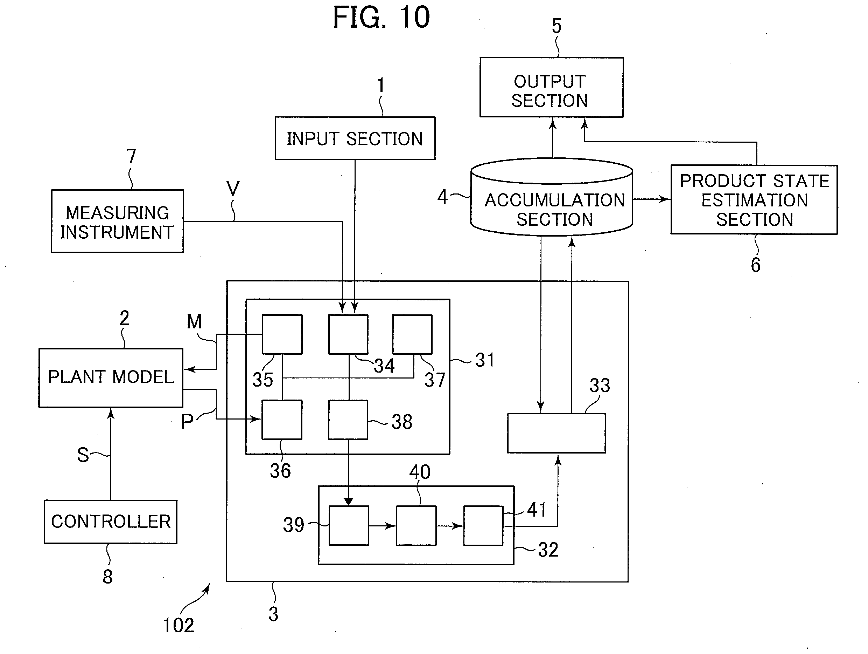

Fig. 10 is a schematic diagram of a model parameter value estimator according to the present embodiment. In Fig. 10, equivalent sections to those in the model parameter value estimator 100 according to the first embodiment are denoted by the same reference characters and description thereof will be omitted as appropriate.

As illustrated in Fig. 10, a model parameter value estimator 102 according to the present embodiment differs from the model parameter value estimator 100 in that the model parameter value estimator 102 includes a product state estimation section 6. The model parameter value estimator 101 is similar to the model parameter value estimator 100 in other configurations.

As illustrated in Fig. 10, the product state estimation section 6 is electrically connected to the accumulation section 4 and the output section 5. The product state estimation section 6 estimates a state of the target product on the basis of the transition of the model parameter values (model parameter average values) corresponding to the averages of the probability density functions accumulated in the accumulation section 4 and related to the model parameter values.

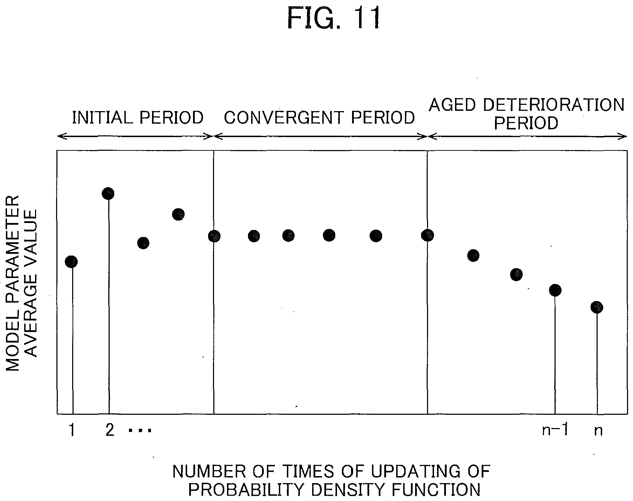

Fig. 11 exemplarily illustrates the transition of the model parameter average values. A vertical axis indicates the model parameter average value and a horizontal axis indicates the number of times of updating the probability density functions. In other words, model parameter average values corresponding to numbers 1, 2, ..., and n are model parameter average values after updating the first, second, ..., and the n-th times, respectively. As illustrated in Fig. 11, in an initial period (period up to the fifth updating) in which the number of times of updating the model parameter values on the basis of the measurement values of the target product is low, the model parameter average values vary. Subsequently, the initial period transitions to a convergent period (period from the sixth updating to the tenth updating) and it is supposed that the model parameter average values converge into a constant value by repeating Bayesian updating. When the convergent period then transitions to an aged deterioration period (period from the 11th updating to the 14th updating) and aged deterioration occurs to the target product, the model parameter average values have a change such as a monotonic decrease, a monotonic increase, or a variation (in Fig. 11, the model parameter average values have a monotonic decrease). Examples of a method of searching a state change of the target product include a method of user's visual determination from the transition of the model parameter average values output from the output section 5 and a method of searching the state change from pattern learning of data about the model parameter average values obtained on the basis of publicly known data mining or machine learning scheme.

It is noted that whether the detected change in the model parameter average values simply results from a fluctuation in the measurement values or the process values or results from the state change of the target product can be determined from the standard deviations of the obtained probability density functions. Specifically, if the standard deviations of the probability density functions are large, it is highly likely that the change in the model parameter average values results from the fluctuation in the measurement values or the process values. Conversely, if the standard deviations of the probability density functions are sufficiently small, it is highly likely that the change in the model parameter average values results from the state change of the target product.

### (Effects)

With the configuration described above, the present embodiment can attain the following effects in addition to each of the effects obtained by the first embodiment described above.

In the present embodiment, it is possible to estimate the state of the target product on the basis of the transition of the model parameter average values. In other words, it is possible to take advantage of the plant model 2 for the estimation of the aged deterioration and the anomaly diagnosis for the target product.

### <Others>

In the embodiments described above, the configuration of the model parameter value estimator such that the model parameter information acquisition section 34 is electrically connected to the measuring instrument 7 and the measurement values V acquired by the measuring instrument 7 are input to the model parameter information acquisition section 34 has been exemplarily illustrated. However, an essential effect of the present invention is to provide a model parameter value estimator that can estimate model parameter values even if the distribution profile and statistics for the probability density functions are either unknown or difficult to estimate. For example, the model parameter value estimator may be configured such that the user inputs the measurement values V acquired by the measuring instrument 7 to the model parameter information acquisition section 34.

Furthermore, in each of the embodiments described above, the configuration of the model parameter value estimator such that the model parameter value output section 35 determines whether all of the plurality of model parameter values have been output to the plant model 2 has been exemplarily illustrated. For example, the model parameter value estimator may be configured such that an apparatus that determines whether all of the plurality of model parameter values have been output to the plant model 2 is provided separately.

Moreover, in each of the embodiments described above, the configuration of the model parameter value estimator such that the function regression section 39 searches a function suited for the profile of the scatter diagram generated by the scatter diagram generation section 38 from the plurality of function data stored in the storage section in advance, and that the probability density function acquisition section 40 normalizes the function generated by the function regression section 39 has been exemplarily illustrated. For example, the model parameter value estimator may be configured such that a plurality of pieces of normalized function data are stored in the storage section in advance, and that the function regression section 39 searches from the storage section the function suited for the profile of the scatter diagram generated by the scatter diagram generation section 38.

Further, in the third embodiment described above, the configuration of the model parameter value estimator 102 such that the product state estimation section 6 is provided in the model parameter value estimator 100 according to the first embodiment has been exemplarily illustrated. However, it is also possible to provide the product state estimation section 6 in the model parameter value estimator 101 according to the second embodiment and in that case, it is possible to attain the effects according to the third embodiment described above.

### Description of Reference Characters

- 2:: Plant model
- 3:: Model parameter value estimation section
- 4:: Accumulation section
- 5:: Output section
- 100:: Model parameter value estimator

## Claims

1. A model parameter value estimator (100) comprising
a plant model (2) which is a preset physical model simulating an operation of a target product, to which plant model (2) a model parameter value is input, and which computes a process value, a model parameter value estimation section (3) which estimates the model parameter value with a higher likelihood on the basis of the process value, an accumulation section (4) which accumulates a computation result of the model parameter value estimation section, and an output section (5) which outputs the computation result of the model parameter value estimation section, **characterized in that**
a measurement value of the target product acquired by a measuring instrument (7) provided in the target product during operation of the target product and a plurality of process values computed by the plant model (2) are input to the model parameter value estimation section (3 during said operation of the target product), and the model parameter value estimation section (3) performs Bayesian updating on a probability density function accumulated in the accumulation section (4) while regarding a function generated on the basis of accuracy evaluation of each of the plurality of process values with respect to the measurement value as a likelihood function, **characterized in that**,
wherein the model parameter value estimation section (3) comprises:
a model parameter information acquisition section (34,44) that acquires an upper limit and a lower limit of the model parameter value;
a model parameter value output section (35,45) to which the upper limit and the lower limit of the model parameter value are input, which changes the model parameter value within a range from the input upper limit to the input lower limit, and which outputs model parameter value to the plant model;
a process value input section (36) to which the plurality of process values output from the plant model to correspond to each of the model parameter values are input;
an evaluation value generation section (37) to which the plurality of process values and the measurement value of the target product are input, and which generates an evaluation value that indicates accuracy evaluation of each of the plurality of input process values with respect to the measurement value of the target product on the basis of a difference between each of the process values and the measurement value;
a scatter diagram generation section (38) to which the evaluation value and each of the model parameter values are input, and which acquires a scatter diagram that depicts a relationship between the input evaluation value and each model parameter value;
a function regression section (39) to which the scatter diagram is input and which performs function regression on the input scatter diagram to generate a function;
a likelihood function acquisition section (41) to which the function is input, which normalizes the input function, which regards the normalized input function as a probability density function related to each of the model parameter values, and which outputs the probability density function as the likelihood function; and
a Bayesian learning section (33) to which the likelihood function and the probability density function accumulated in the accumulation section are input, and which performs Bayesian updating using the input likelihood function while assuming the probability density function accumulated in the accumulation section assumed as a prior distribution.

2. The model parameter value estimator according to claim 1, wherein
the output section (5) compares and outputs probability density functions before and after the Bayesian updating.

3. The model parameter value estimator according to claim 2, comprising
a product state estimation section (6) that estimates a state change of the target product on the basis of transition of an average value of the probability density function accumulated in the accumulation section (4).

4. The model parameter value estimator according to claim 1, wherein
a model parameter information acquisition section (44) that acquires an upper limit and lower limit of each of model parameter values related to two or more types of model parameters;
a model parameter value output section (45) to which the upper limit and the lower limit of each of the model parameter values related to the two or more types of model parameters are input, which simultaneously changes the model parameter values of the two or more types of the model parameters within the range from the input upper limit to the input lower limit, and which outputs model parameter value to the plant model.

5. The model parameter value estimator according to claim 4, wherein
the two or more types of the model parameters include a parameter related to static characteristics of the process values of the target product and a parameter related to dynamic characteristics thereof.

6. The model parameter value estimator according to claim 4, comprising
a product state estimation section (6) that estimates a state change of the target product on the basis of transition of an average value of the probability density function accumulated in the accumulation section.

7. A model parameter value estimation method for estimating a model parameter value by a programmed computer (200), **characterized in that**
a first step (S2-S4) of, by a plant model which is a preset physical model simulating an operation of a target product, computing a plurality of process values from an input model parameter value; and
a second step (S5-S11) of, by a model parameter value estimation section (3), performing during operation of the target product Bayesian updating on a probability density function accumulated in an accumulation section (4) and related to the model parameter value while regarding a function generated on the basis of accuracy evaluation of the plurality of process values with respect to a measurement value of the target product as a likelihood function, said measurement value acquired by a measuring instrument (7) provided in the target product during said operation of the target product, **characterized in that**,
wherein before the first step, the model parameter value estimation method comprises:
a step (S1) of, by a model parameter information acquisition section (34,44), inputting an upper limit and a lower limit of the model parameter value and the measurement value of the target product to a model parameter value output section (35,45); and
a step (S2) of, by the model parameter value output section (35,45), changing the model parameter value within a range from the input upper limit to the input lower limit, and outputting a plurality of obtained model parameter values to the plant model, and
the second step includes:
a step (S5) of, by a process value input section (36), inputting the plurality of process values output from the plant model to correspond to each of the model parameter values to an evaluation value generation section (37)
a step (S5) of, by the evaluation value generation section (37), generating an evaluation value that indicates accuracy evaluation of each of the plurality of input process values with respect to the measurement value of the target product on the basis of a difference between each of the plurality of process values and the measurement value;
a step (S6) of, by a scatter diagram generation section (38), acquiring a scatter diagram that depicts a relationship between the evaluation value and each of the model parameter values;
a step (S7) of, by a function regression section (39), performing function regression on the scatter diagram to generate a function;
a step (S8,S9) of, by a likelihood function acquisition section (41), normalizing the generated function, regarding the normalized input function as a probability density function related to each of the model parameter values, and providing the probability density function as the likelihood function; and
a step (S10, S11) of, by a Bayesian learning section (33), acquiring the probability density function accumulated in the accumulation section (4) and related to the model parameter value, and performing Bayesian updating using the input likelihood function while assuming the probability density function acquired from the accumulation section (4) as a prior distribution, thereby generating posterior distribution data related to the model parameter value accumulating the posterior distribution data in the accumulation section (4).

8. A computer program comprising instructions to cause the device of claim 1 to carry out the steps of the method of claim 7.

9. A computer-readable storage medium (207) comprising instructions to cause the device of claim 1 to carry out the method of claim 7.

## Patentansprüche

1. Modellparameterwert-Schätzvorrichtung (100), die umfasst:
ein Anlagenmodell (2), das ein vorgegebenes physikalisches Modell ist, das einen Betrieb eines Zielprodukts simuliert, wobei in das Anlagenmodell (2) ein Modellparameterwert eingegeben wird, und das einen Prozesswert berechnet, einen Modellparameterwert-Schätzabschnitt (3), der den Modellparameterwert mit einer höheren Wahrscheinlichkeit auf der Grundlage des Prozesswertes schätzt, einen Akkumulationsabschnitt (4), der ein Berechnungsergebnis des Modellparameterwert-Schätzabschnitts akkumuliert, und einen Ausgabeabschnitt (5), der das Berechnungsergebnis des Modellparameterwert-Schätzabschnitts ausgibt, **dadurch gekennzeichnet, dass**
ein Messwert des Zielprodukts, der während des Betriebs des Zielprodukts durch ein in dem Zielprodukt bereitgestelltes Messinstrument (7) erfasst wird, und mehrere durch das Anlagenmodell (2) berechnete Prozesswerte während des Betriebs des Zielprodukts in den Modellparameterwert-Schätzabschnitt (3) eingegeben werden und der Modellparameterwert-Schätzabschnitt (3) ein Bayes-Aktualisieren an einer in dem Akkumulationsabschnitt (4) akkumulierten Wahrscheinlichkeitsdichtefunktion ausführt, während er eine auf der Grundlage einer Genauigkeitsbewertungjedes der mehreren Prozesswerte bezüglich des Messwerts erzeugte Funktion als eine Wahrscheinlichkeitsfunktion betrachtet, **dadurch gekennzeichnet, dass**
der Modellparameterwert-Schätzabschnitts (3) umfasst:
einen Modellparameterinformation-Erfassungsabschnitt (34, 44), der eine Obergrenze und eine Untergrenze des Modellparameterwerts erfasst;
einen Modellparameterwert-Ausgabeabschnitt (35, 45), in den die Obergrenze und die Untergrenze des Modellparameterwerts eingegeben werden, der den Modellparameterwert innerhalb eines Bereichs von der eingegebenen Obergrenze bis zu der eingegebenen Untergrenze ändert und der den Modellparameterwert an das Anlagenmodell ausgibt;
einen Prozesswert-Eingabeabschnitt (36), in den die mehreren Prozesswerte, die von dem Anlagenmodell ausgegeben werden, um jeden der Modellparameterwerte zu entsprechen, eingegeben werden;
einen Bewertungswert-Erzeugungsabschnitt (37), in den die mehreren Prozesswerte und der Messwert des Zielprodukts eingegeben werden und der einen Bewertungswert erzeugt, der die Genauigkeitsbewertungjedes der mehreren eingegebenen Prozesswerte bezüglich des Messwerts des Zielprodukts auf der Grundlage eines Unterschieds zwischen den Prozesswerten und dem Messwert angibt;
einen Streuungsdiagramm-Erzeugungsabschnitt (38), in den der Bewertungswert und jeder der Modellparameterwerte eingegeben werden und der ein Streuungsdiagramm erfasst, das eine Beziehung zwischen dem eingegebenen Bewertungswert und jedem Modellparameterwert darstellt;
einen Funktionsregressionsabschnitt (39), in den das Streuungsdiagramm eingegeben wird und der eine Funktionsregression an dem eingegebenen Streuungsdiagramm ausführt, um eine Funktion zu erzeugen;
einen Wahrscheinlichkeitsfunktions-Erfassungsabschnitt (41), in den die Funktion eingegeben wird, der die eingegebene Funktion normiert, der die normierte eingegebene Funktion als eine Wahrscheinlichkeitsdichtefunktion betrachtet, die auf jeden der Modellparameterwerte bezogen ist, und der die Wahrscheinlichkeitsdichtefunktion als die Wahrscheinlichkeitsfunktion ausgibt; und
einen Bayes-Lernabschnitt (33), in den die Wahrscheinlichkeitsfunktion und die im Akkumulationsabschnitt akkumulierte Wahrscheinlichkeitsdichtefunktion eingegeben werden und der ein Bayes-Aktualisieren unter Verwendung der eingegebenen Wahrscheinlichkeitsfunktion ausführt, während er die in dem Akkumulationsabschnitt akkumulierte Wahrscheinlichkeitsdichtefunktion als eine frühere Verteilung annimmt.

2. Modellparameterwert-Schätzvorrichtung nach Anspruch 1, wobei
der Ausgabeabschnitt (5) die Wahrscheinlichkeitsdichtefunktionen vor dem und nach dem Bayes-Aktualisieren vergleicht und ausgibt.

3. Modellparameterwert-Schätzvorrichtung nach Anspruch 2, die umfasst:
einen Produktzustands-Schätzabschnitt (6), der eine Zustandsänderung des Zielprodukts auf der Grundlage eines Übergangs eines Durchschnittswerts der in dem Akkumulationsabschnitt (4) akkumulierten Wahrscheinlichkeitsdichtefunktion schätzt.

4. Modellparameterwert-Schätzvorrichtung nach Anspruch 1, wobei
ein Modellparameterinformation-Erfassungsabschnitt (44), der eine Obergrenze und eine Untergrenze jedes der Modellparameterwerte, die auf zwei oder mehr Typen der Modellparameter bezogen sind, erfasst;
ein Modellparameterwert-Ausgabeabschnitt (45), in den die Obergrenze und die Untergrenze jedes der Modellparameterwerte, die auf die zwei oder mehr Typen von Modellparametern bezogen sind, eingegeben werden, der die Modellparameterwerte der zwei oder mehr Typen der Modellparameter innerhalb des Bereichs von der eingegebenen Obergrenze bis zur eingegebenen Untergrenze gleichzeitig ändert und der den Modellparameterwert an das Anlagenmodell ausgibt.

5. Modellparameterwert-Schätzvorrichtung nach Anspruch 4, wobei
die zwei oder mehr Typen der Modellparameter einen auf die statischen Eigenschaften der Prozesswerte des Zielprodukts bezogenen Parameter und einen auf deren dynamische Eigenschaften bezogenen Parameter enthalten.

6. Modellparameterwert-Schätzvorrichtung nach Anspruch 4, die umfasst
einen Produktzustands-Schätzabschnitt (6), der eine Zustandsänderung des Zielprodukts auf der Grundlage des Übergangs eines Durchschnittswerts der in dem Akkumulationsabschnitt akkumulierten Wahrscheinlichkeitsdichtefunktion schätzt.

7. Modellparameterwert-Schätzverfahren zum Schätzen eines Modellparameterwerts durch einen programmierten Computer (200), **gekennzeichnet durch**
einen ersten Schritt (S2-S4) des Berechnens mehrerer Prozesswerte von einem eingegebenen Modellparameterwert durch ein Anlagenmodell, das ein vorgegebenes physikalisches Modell ist, das einen Betrieb eines Zielprodukts simuliert; und
einen zweiten Schritt (S5-S11) des Ausführens während des Betriebs des Zielprodukts eines Bayes-Aktualisierens einer in einem Akkumulationsabschnitt (4) akkumulierten und auf den Modellparameterwert bezogenen Wahrscheinlichkeitsdichtefunktion durch einen Modellparameterwert-Schätzabschnitt (3), während eine auf der Grundlage einer Genauigkeitsbewertung der mehreren Prozesswerte bezüglich eines Messwerts des Zielprodukts erzeugte Funktion als eine Wahrscheinlichkeitsfunktion betrachtet wird, wobei der Messwert durch ein in dem Zielprodukt bereitgestelltes Messinstrument (7) während des Betriebs des Zielprodukts erfasst wird, **dadurch gekennzeichnet, dass**
vor dem ersten Schritt das Modellparameterwert-Schätzverfahren umfasst:
einen Schritt (S1) des Eingebens einer Obergrenze und einer Untergrenze des Modellparameterwerts und des Messwerts des Zielprodukts in einen Modellparameterwert-Ausgabeabschnitt (35, 45) durch den Modellparameterinformation-Erfassungsabschnitt (34, 44); und
einen Schritt (S2) des Änderns des Modellparameterwerts innerhalb des Bereichs von der eingegebenen Obergrenze bis zur eingegebenen Untergrenze und des Ausgebens mehrerer erhaltener Modellparameterwerte an das Anlagenmodell durch den Modellparameterwert-Ausgabeabschnitt (35, 45), wobei
der zweite Schritt enthält:
einen Schritt (S5) des Eingebens mehrerer Prozesswerte, die von dem Anlagenmodell ausgegeben werden, um jedem der Modellparameterwerte zu entsprechen, in einen Bewertungswert-Erzeugungsabschnitt (37) durch einen Prozesswert-Eingabeabschnitt (36),
einen Schritt (S5) des Erzeugens eines Bewertungswerts, der eine Genauigkeitsbewertung jedes der mehreren eingegebenen Prozesswerte bezüglich des Messwerts des Zielprodukts angibt, auf der Grundlage eines Unterschieds zwischen jedem der mehreren Prozesswerte und dem Messwert durch den Bewertungswert-Erzeugungsabschnitt (37);
einen Schritt (S6) des Erfassens eines Streuungsdiagramms, das eine Beziehung zwischen dem Bewertungswert und jedem der Modellparameterwert darstellt, durch einen Streuungsdiagramm-Erzeugungsabschnitt;
einen Schritt (S7) des Ausführens einer Funktionsregression an dem Streuungsdiagramm, um eine Funktion zu erzeugen, durch einen Funktionsregressionsabschnitt (39);
einen Schritt (S8, S9) des Normierens der erzeugten Funktion, des Betrachtens der normierten eingegebenen Funktion als eine auf jeden der Modellparameterwerte bezogene Wahrscheinlichkeitsdichtefunktion und des Bereitstellens der Wahrscheinlichkeitsdichtefunktion als die Wahrscheinlichkeitsfunktion durch einen Wahrscheinlichkeitsfunktions-Erfassungsabschnitt (41); und
einen Schritt (S10, S11) des Erfassens der in dem Akkumulationsabschnitt (4) akkumulierten und auf den Modellparameterwert bezogenen Wahrscheinlichkeitsdichtefunktion und des Ausführens eines Bayes-Aktualisierens unter Verwendung der eingegebenen Wahrscheinlichkeitsfunktion, während die von dem Akkumulationsabschnitt (4) erfasste Wahrscheinlichkeitsdichtefunktion als eine frühere Verteilung angenommen wird, dadurch des Erzeugens von späteren Verteilungsdaten, die auf den Modellparameterwert bezogen sind, und des Akkumulierens der späteren Verteilungsdaten in dem Akkumulationsabschnitt (4) durch einen Bayes-Lernabschnitt (33).

8. Computerprogramm, das Anweisungen umfasst, um die Vorrichtung nach Anspruch 1 zu veranlassen, die Schritte des Verfahrens nach Anspruch 7 auszuführen.

9. Computerlesbares Speichermedium (207), das Anweisungen umfasst, um die Vorrichtung nach Anspruch 1 zu veranlassen, das Verfahren nach Anspruch 7 auszuführen.

## Revendications

1. Estimateur de valeur de paramètre de modèle (100) comprenant
un modèle d'installation (2) qui est un modèle physique prédéfini simulant une opération d'un produit cible, modèle d'installation (2) vers lequel une valeur de paramètre de modèle est entrée, et qui calcule une valeur de processus, une section d'estimation de valeur de paramètre de modèle (3) qui estime la valeur de paramètre de modèle avec une vraisemblance plus élevée sur la base de la valeur de processus, une section d'accumulation (4) qui accumule un résultat de calcul de la section d'estimation de valeur de paramètre de modèle, et une section de sortie (5) qui sort le résultat de calcul de la section d'estimation de valeur de paramètre de modèle, **caractérisé en ce que**
une valeur de mesure du produit cible acquise par un instrument de mesurage (7) prévu dans le produit cible pendant une opération du produit cible et une pluralité de valeurs de processus calculées par le modèle d'installation (2) sont entrées vers la section d'estimation de valeur de paramètre de modèle (3) pendant ladite opération du produit cible, et la section d'estimation de valeur de paramètre de modèle (3) exécute une mise à jour bayésienne sur une fonction de densité de probabilité accumulée dans la section d'accumulation (4) tout en considérant une fonction générée sur la base d'une évaluation de précision de chacune de la pluralité de valeurs de processus par rapport à la valeur de mesure à titre de fonction de vraisemblance, **caractérisé en ce que**
dans lequel la section d'estimation de valeur de paramètre de modèle (3) comprend :
une section d'acquisition d'information de paramètre de modèle (34, 44) qui acquiert une limite supérieure et une limite inférieure de la valeur de paramètre de modèle ;
une section de sortie de valeur de paramètre de modèle (35, 45) vers laquelle la limite supérieure et la limite inférieure de la valeur de paramètre de modèle sont entrées, qui change la valeur de paramètre de modèle à l'intérieur d'une plage depuis la limite supérieure entrée jusqu'à la limite inférieure entrée, et qui sort une valeur de paramètre de modèle vers le modèle d'installation ;
une section d'entrée de valeur de processus (36) vers laquelle la pluralité de valeurs de processus sorties depuis le modèle d'installation pour correspondre à chacune des valeurs de paramètre de modèle sont entrées ; une section de génération de valeur d'évaluation (37) vers laquelle la pluralité de valeurs de processus et la valeur de mesure du produit cibles sont entrées, et qui génère une valeur d'évaluation qui indique une évaluation de précision de chacune de la pluralité de valeurs de processus entrées par rapport à la valeur de mesure du produit cible sur la base d'une différence entre chacune des valeurs de processus et la valeur de mesure ;
une section de génération de diagramme de diffusion (38) vers laquelle la valeur d'évaluation et chacune des valeurs de paramètre de modèle sont entrées, et qui acquiert un diagramme de diffusion qui décrit une relation entre la valeur d'évaluation entrée et chaque valeur de paramètre de modèle ;
une section de régression de fonction (39) vers laquelle diagramme de diffusion est entré, et qui exécute une régression de fonction sur le diagramme de diffusion entré pour générer une fonction ;
une section d'acquisition de fonction de vraisemblance (41) vers laquelle la fonction est entrée, qui normalise la fonction entrée, qui considère la fonction entrée normalisée comme une fonction de densité de probabilité relative à chacune des valeurs de paramètre de modèle, et qui sort la fonction de densité de probabilité à titre de fonction de vraisemblance ; et
une section d'apprentissage bayésien (33) vers laquelle la fonction de vraisemblance et la fonction de densité de probabilité accumulées dans la section d'accumulation sont entrées, et qui exécute une mise à jour bayésienne en utilisant la fonction de vraisemblance entrée tout en supposant la fonction de densité de probabilité accumulée dans la section d'accumulation comme étant une distribution antérieure.

2. Estimateur de valeur de paramètre de modèle selon la revendication 1, dans lequel
la section de sortie (5) compare et sort des fonctions de densité de probabilité avant et après la mise à jour bayésienne.

3. Estimateur de valeur de paramètre de modèle selon la revendication 2, comprenant
une section d'estimation d'état de produit (6) qui estime un changement d'état du produit cible sur la base d'une transition d'une valeur moyenne de la fonction de densité de probabilité accumulée dans la section d'accumulation (4).

4. Estimateur de valeur de paramètre de modèle selon la revendication 1, comprenant
une section d'acquisition d'information de paramètre de modèle (44) qui acquiert une limite supérieure et une limite inférieure de chacune des valeurs de paramètre de modèle relative à deux ou plusieurs types de paramètre de modèle ;
une section de sortie de valeur de paramètre de modèle (45) vers laquelle la limite supérieure et la limite inférieure de chacune des valeurs de paramètre sont entrées, qui change simultanément les valeurs de paramètre de modèle desdits deux ou plusieurs types de paramètre de modèle à l'intérieur de la plage depuis la limite supérieure entrée jusqu'à la limite inférieure entrée, et qui sort une valeur de paramètre de modèle vers le modèle d'installation.

5. Estimateur de valeur de paramètre de modèle selon la revendication 4, dans lequel
lesdits deux ou plusieurs types de paramètre de modèle incluent un paramètre relatif à des caractéristiques statiques des valeurs de processus du produit cible et un paramètre relatif à des caractéristiques dynamiques de celles-ci.

6. Estimateur de valeur de paramètre de modèle selon la revendication 4, comprenant
une section d'estimation d'état de produit (6) qui estime un changement d'état du produit cible sur la base d'une transition d'une valeur moyenne de la fonction de densité de probabilité accumulée dans la section d'accumulation.

7. Procédé d'estimation de valeur de paramètre de modèle pour estimer une valeur de paramètre de modèle via un ordinateur programmé (200), **caractérisé par**
une première étape (S2-S4) consistant à, via un modèle d'installation qui est un modèle physique prédéfini simulant une opération d'un produit cible, calculer une pluralité de valeurs de processus à partir d'une valeur de paramètre de modèle entrée ; et
une seconde étape (S5-S11) consistant à, via une section d'estimation de valeur de paramètre de modèle (3), exécuter, pendant une opération du produit cible, une mise à jour bayésienne sur une fonction de densité de probabilité accumulée dans une section d'accumulation (4) et relative à la valeur de paramètre de modèle tout en considérant une fonction générée sur la base d'une évaluation de précision de la pluralité de valeurs de processus par rapport à une valeur de mesure du produit cible à titre de fonction de vraisemblance, ladite valeur de mesure étant acquise via un instrument de mesurage (7) prévu dans le produit cible pendant ladite opération du produit cible, **caractérisé en ce que**
dans lequel, avant la première étape, le procédé d'estimation de valeur de paramètre de modèle comprend :
une étape (S1) consistant à, via une section d'acquisition d'information de paramètre de modèle (34, 44), entrer une limite supérieure et une limite inférieure de la valeur de paramètre de modèle et de la valeur de mesure du produit cible vers une section de sortie de valeur de paramètre de modèle (35, 45) ; et
une étape (S2) consistant à, via la section de sortie de valeur de paramètre de modèle (35, 45), changer la valeur de paramètre de modèle à l'intérieur d'une plage depuis la limite supérieure entrée jusqu'à la limite inférieure entrée, et sortir une pluralité de valeurs de paramètre de modèle obtenues vers le modèle d'installation, et
la seconde étape inclut :
une étape (S5) consistant à, via une section d'entrée de valeur de processus (36), entrer la pluralité de valeurs de processus sorties depuis le modèle d'installation pour correspondre à chacune des valeurs de paramètre de modèle vers une section de génération de valeur d'évaluation (37),
une étape (S5) consistant à, via la section de génération de valeur d'évaluation (37), générer une valeur d'évaluation qui indique une évaluation de précision de chacune de la pluralité de valeurs de processus entrées par rapport à la valeur de mesure du produit cible sur la base d'une différence entre chacune de la pluralité de valeurs de processus et la valeur de mesurage ;
une étape (S6) consistant à, via une section de génération de diagramme de diffusion (38), acquérir un diagramme de diffusion qui décrit une relation entre la valeur d'évaluation et chacune des valeurs de paramètre de modèle ;
une étape (S7) consistant à, via une section de régression de fonction (39), exécuter une régression de fonction sur le diagramme de diffusion pour générer une fonction :
une étape (S8, S9) consistant à, via une section d'acquisition de fonction de vraisemblance (41), normaliser la fonction générée, considérer la fonction entrée normalisée comme une fonction de densité de probabilité relative à chacune des valeurs de paramètre de modèle, et fournir la fonction de densité de probabilité à titre de fonction de vraisemblance ; et
une étape (S10, S11) consistant à, via une section d'apprentissage bayésien (33), acquérir la fonction de densité de probabilité accumulée dans la section d'accumulation (4) et relative à la valeur de paramètre de modèle, et exécuter une mise à jour bayésienne en utilisant la fonction de vraisemblance entrée tout en supposant la fonction de densité de probabilité acquise depuis la section d'accumulation (4) comme étant une distribution antérieure, générant ainsi des données de distribution postérieure relatives à la valeur de paramètre de modèle en accumulant les données de distribution postérieure dans la section d'accumulation (4).

8. Programme d'ordinateur comprenant des instructions pour amener le dispositif de la revendication 1 à mettre en œuvre les étapes du procédé de la revendication 7.

9. Support de stockage lisible sur ordinateur (207) comprenant des instructions pour amener le dispositif de la revendication 1 à mettre en œuvre le procédé de la revendication 7.
